# EUROPEAN PATENT APPLICATION

(11) **EP 1 482 441 A2**
(43) Date of publication of application: **01.12.2004**
(21) Application number: 04010331.9
(22) Date of filing: 30.04.2004
(51) Int. Cl.: G06K 9/00

(54) **Sweep-type fingerprint sensor module and a sensing method therefor**

(30) Priority: 20.05.2003 US 441022
(71) Applicant: LighTuning Tech. Inc., Hsinchu (TW)
(72) Inventor: Chou, Bruce C. S., Hsin Chu (TW)
(74) Representative: Urner, Peter, Dipl.-Phys.

(57) **Abstract**

A sweep-type fingerprint sensor module includes a microprocessor and a sweep-type fingerprint sensor, which includes a substrate, and a sensing members array, a speed-detecting unit, and a processing circuit on the substrate. The sensing members array is composed of a plurality of fingerprint sensing members. When the finger sweeps across the sweep-type fingerprint sensor, the sensing members array sequentially acquires plural fingerprint fragment images from the finger with a sampling time interval. The speed-detecting unit is composed of first and second plate electrodes. The processing circuit processes and then outputs signals from the sensing members array and the speed-detecting unit. The microprocessor electrically connected to the processing circuit derives a sweeping speed of the finger by the time difference between different time points when the plate electrodes contact the finger, determines the sampling time interval and then reconstructs the fingerprint fragment images into a complete fingerprint image.

## Description

### BACKGROUND OF THE INVENTION

### Field of the Invention

The invention relates to a sweep-type fingerprint sensor module and a sensing method therefor, and more particular to a sweep-type fingerprint sensor module capable of effectively preventing the finger from shaking when the finger sweeps across the sensor and having a speed-detecting unit and a sensing method therefor.

### Description of the Related Art

There are many known techniques of identifying an individual through the identification of the individual's fingerprint. The use of an ink pad and the direct transfer of ink by the thumb or finger from the ink pad to a recording card is the standard way of making this identification. Then, an optical scanner scans the recording card to get an image, which is then compared to the fingerprint image stored previously in the computer database. However, the most serious drawback of the above-mentioned method is that the fingerprint identification cannot be processed in real-time, and thus cannot satisfy the requirement of real-time authentication, such as network authentication, e-business, portable electronics products, personal ID card, security system, and the like.

The method for reading a fingerprint in real-time has become the important technology in the biometrics market. Conventionally, an optical fingerprint sensor may be used to read a fingerprint in real-time. However, the optical fingerprint sensor has a drawback because it is large in size, expensive in price and limitation use in dirty and dry finger. Consequently, silicon fingerprint sensors, which overcome the drawbacks of the optical sensor and are formed by silicon semiconductor technology, are developed.

Owing to the finger dimension, the sensing area of the conventional silicon fingerprint sensor is large, for example, it is greater than 9 mm * 9 mm. Furthermore, owing to the limitations in manufacturing the silicon integrated circuit, only 50 to 70 good dies may be formed in a 6" wafer. The price of a single fingerprint sensor is greater than at least 10 U.S. dollars when the packaging and testing costs are included. Thus, this expensive price may restrict the silicon fingerprint sensor in various consumer electronics applications such as notebook computers, mobile phones, personal digital assistants, computer peripheral product, or even personal ID cards embedded with the fingerprint sensor.

Consequently, it is possible to reduce one-dimensional width of the conventional, two-dimensional (2D) silicon fingerprint sensor so as to increase the number of good dies and decrease the price of the sensor chip. In this case, the finger sweeps across the sensor surface and the overall finger is sequentially scanned into plural fingerprint fragment images, which are then reconstructed into a complete fingerprint image.

Mainguet discloses a sweep-type fingerprint sensor formed by pyroelectric or piezoelectric material (pressure-type) and a method for re-arranging plural fragment images in U.S.P. No. 6,289,114. However, the method has to acquire many fingerprint fragment images and to reconstruct them into a complete fingerprint image because the sensor cannot determine the sweeping speed of the finger. In this case, the microprocessor has to be powerful, the capacity of the memory has to be great enough, and very probable errors may happen due to reconstruction of so many fingerprint fragments.

In the conventional sweep-type fingerprint sensor, the number of sensing members in the Y-axis direction (the sweeping direction of the finger) is preferably decreased in order to reduce the sensor area. In this case, the dimension of the sensor in the Y-axis direction ranges from 0.8 to 1.6 mm. Thus, the number of acquired fingerprint fragment images is a lot.

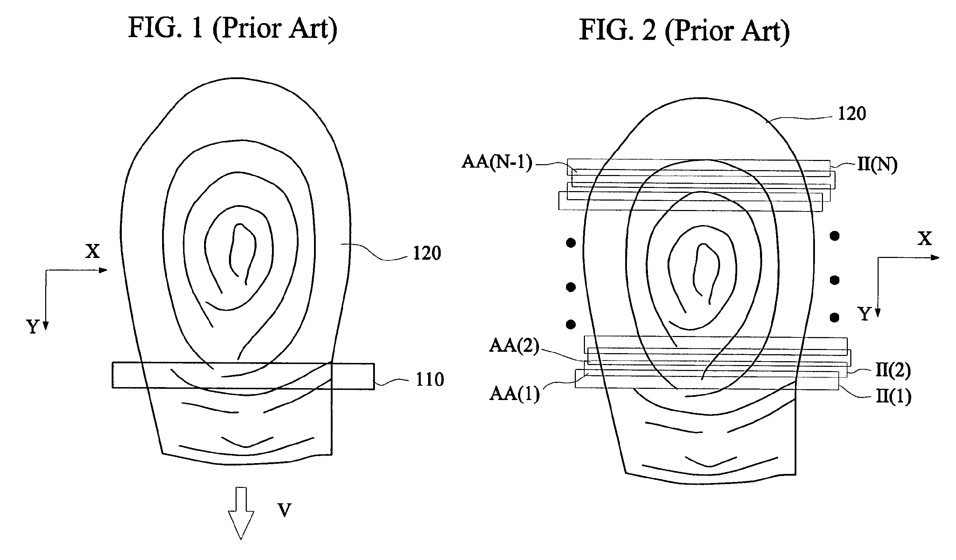

FIG. 1 is a schematic illustration showing a finger sweeping across a conventional sweep-type fingerprint sensor. As shown in FIG. 1, a finger 120 sweeps across a sweep-type fingerprint sensor 110 in the Y-axis direction with a speed V, and the sweep-type fingerprint sensor 110 acquires a plurality of fingerprint fragment images.

FIG. 2 is a schematic illustration showing plural fingerprint fragment images acquired by the fingerprint sensor of FIG. 1. As shown in FIG. 2, the acquired fingerprint fragment images II(1) to II(N) may be reconstructed into a complete fingerprint image of the finger 120. Because the sensing dimension along the sweeping direction of the conventional sweep-type fingerprint sensor is too small, tens to hundreds of images II(1) to II(N) have to be stored. The prior art only acknowledges to design the sweep-type fingerprint sensor with reduced area of the sensor (reduced number of sensing members in the Y-axis direction), so the Y-axis dimension of the sensing members array mostly ranges from 0.8 to 1.6 mm. Furthermore, since the conventional fingerprint sensor does not detect the sweeping speed of the finger and has to take a safety factor into consideration, the overlapped regions AA(1) to AA(N-1) between adjacent images are too large and are not constant, thereby increasing the number of fragment images and complicating the reconstruction process.

Regarding about the above-mentioned drawbacks, it is quite difficult for the conventional sweep-type fingerprint sensor module to have minutia points extraction from a recombined fingerprint image due to such many fragment images without errors happening. Therefore, a method in realistic application is to transfer the acquired gray-scale images into the frequency domain, and the advantage of this method resides in that it does not need a lot of image processing steps. However, this method tends to cause high error rate due to the humidity of the finger or contamination on the chip surface.

In addition, because the finger tends to shake laterally when it sweeps across the sweep-type fingerprint sensor, the subsequent process for reconstructing the fingerprint fragment images sensed by the fingerprint sensor becomes more and more complex. Furthermore, the sweeping speed of the finger across the sensor depends on the user's inertial behavior and varies accordingly, so the conventional designer has to assume that the finger sweeping speed is within a predetermined range or have the typical users to practice the sweeping speed within the predetermined range so that the acquiring time period of each fragment image and the interval between two fragment images may be obtained. If the sweeping speed of some user is out of the designed range, the fingerprint cannot be correctly sensed. So, the conventional way is labersome and decreases the user's interest of use.

Therefore, it is an important subject of the invention to provide a sweep-type fingerprint sensor module capable of reconstructing a complete fingerprint image with a reduced number of fingerprint fragment images.

### SUMMARY OF THE INVENTION

It is therefore an object of the invention to provide a sweep-type fingerprint sensor module capable of detecting the finger's sweeping speed, minimizing the overlapped region of fragment images, and thus reducing the number of fragment images for fingerprint reconstruction.

Another object of the invention is to provide a finger guiding device for inertially guiding the finger's sweeping direction and preventing the finger's sweeping direction changes and jitters.

Still another object of the invention is to provide a sweep-type fingerprint sensor module capable of discriminating if the finger is live or not.

Yet still another object of the invention is to provide a sweep-type fingerprint sensor module with the power on function as the finger touches the module.

To achieve the above-mentioned objects, the invention provides a sweep-type fingerprint sensor module including a microprocessor and a sweep-type fingerprint sensor, which includes a substrate, and a sensing members array, a speed-detecting unit, and a processing circuit on the substrate. The sensing members array is composed of a plurality of fingerprint sensing members. When the finger sweeps across the sweep-type fingerprint sensor, the sensing members array sequentially acquires plural fingerprint fragment images from the finger with a sampling time interval. The speed-detecting unit is composed of first and second plate electrodes. The processing circuit processes and then outputs signals from the sensing members array and the speed-detecting unit. The microprocessor electrically connected to the processing circuit derives a sweeping speed of the finger by the time difference when the finger sweeps across the sensor surface and sequentially contacts the first and second plate electrodes. Detection of sweeping speed can control the sampling time interval of image catching, minimize the number of captured fingerprint fragment images, and easily construct the fingerprint fragment images into a complete fingerprint image.

To achieve the above-mentioned objects, the invention also provides a sensing method for a sweep-type fingerprint sensor module. The method includes the steps of: detecting a sweeping speed of a finger; determining a sampling time interval according to the sweeping speed; sequentially acquiring a plurality of fingerprint fragment images from the finger with the sampling time interval, and outputting a plurality of fingerprint fragment signals corresponding to the fingerprint fragment images; and reconstructing the plurality of fingerprint fragment signals into a complete fingerprint image.

By detecting the sweeping speed of the finger, the number of acquired fingerprint fragment images may be effectively reduced, the image processing may be simplified, and the cost may be decreased.

### BRIEF DESCRIPTION OF THE DRAWINGS

FIG. 1 is a schematic illustration showing a finger sweeping across a conventional sweep-type fingerprint sensor.
FIG. 2 is a schematic reconstruction illustration showing plural fingerprint fragment images acquired by the fingerprint sensor of FIG. 1.
FIG. 3 is a schematic illustration showing a finger sweeping across a sweep-type fingerprint sensor of the invention.
FIG. 4 is a schematic reconstruction illustration showing plural fingerprint fragment images acquired by the fingerprint sensor of FIG. 3.
FIG. 5 is a top view showing a sweep-type fingerprint sensor module according to a first embodiment of the invention.
FIG. 6 is a cross-sectional view taken along a line L6-L6 of FIG. 5.
FIG. 7 is a side view showing the sweep-type fingerprint sensor in operation according to the first embodiment of the invention.
FIG. 8 is a flow chart showing a sensing method for the sweep-type fingerprint sensor of the invention.
FIG. 9 is a schematic top view showing a sweep-type fingerprint sensor module according to a second embodiment of the invention.
FIG. 10 is a schematically cross-sectional view taken along a line 10-10 of FIG. 9.
FIG. 11 is a schematically cross-sectional view showing a modified embodiment taken along a line 11-11 of FIG. 9.
FIG. 12 is a side view showing the roller and speed/position detector of FIG. 10.
FIG. 13 is front view showing the roller of FIG. 10.

### DETAILED DESCRIPTION OF THE INVENTION

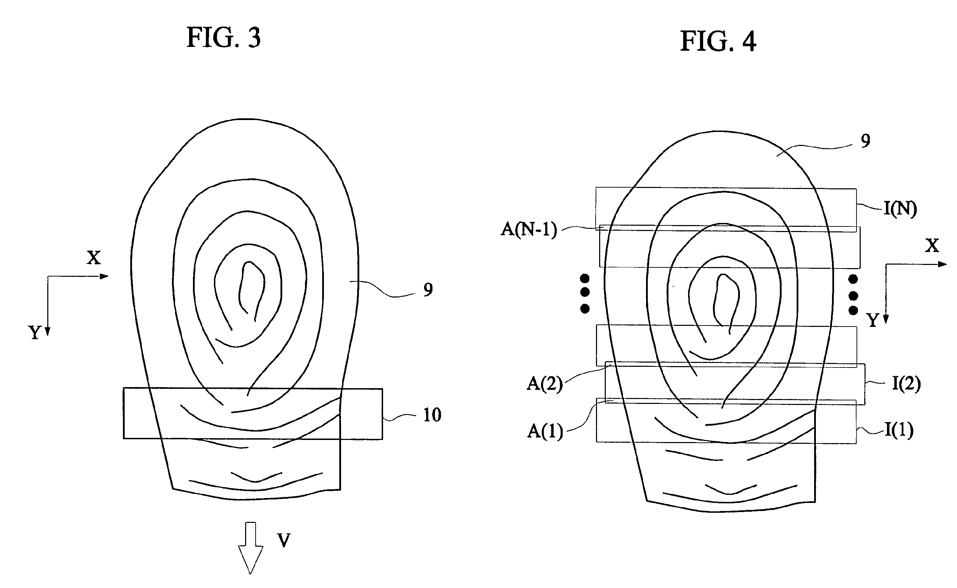

FIG. 3 is a schematic illustration showing a finger sweeping across a sweep-type fingerprint sensor of the invention, and FIG. 4 is a schematic illustration showing plural fingerprint fragment images acquired by the fingerprint sensor of FIG. 3. As shown in FIGS. 3 and 4, when a finger 9 sweeps across a sweep-type fingerprint sensor 10 at a speed V, the sweep-type fingerprint sensor 10 helps to detect the speed V of the finger 9 simultaneously, and acquires a plurality of fingerprint fragment images I(1) to I(N) according to the speed V, wherein N is a positive integral greater than 1. The overlapped regions between adjacent two fingerprint fragment images are A(1) to A(N-1), which are almost a constant so as to facilitate the reconstruction of these fingerprint fragment images.

The above-mentioned sensor may be embedded into any platform of any application device. When the finger 9 is placed on the platform and sweeps along the direction indicated by the arrow, the sensor 10 may sequentially acquire the fingerprint fragment images, which may be re-arranged into a complete fingerprint image for verification or identification. Since the sweeping speed of the finger may be regarded as a constant speed within the entire sweeping movement or within a predetermined distance, obtaining the sweeping speed V may facilitate the adjustment of the time interval in acquiring the images so as to reconstruct a full fingerprint image according to a minimum number of fragment images. In this case, it is not necessary to use a microprocessor with powerful functions or a memory with large capacity, and it is also possible to greatly reduce the possibility of recognition errors, decrease the cost of the sensor and the recognition system, and effectively popularize the application areas of the sensor.

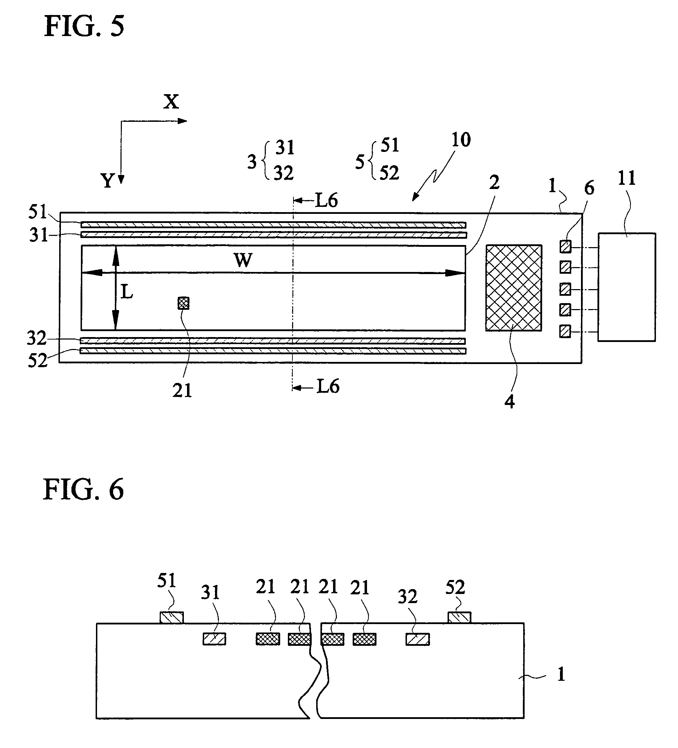

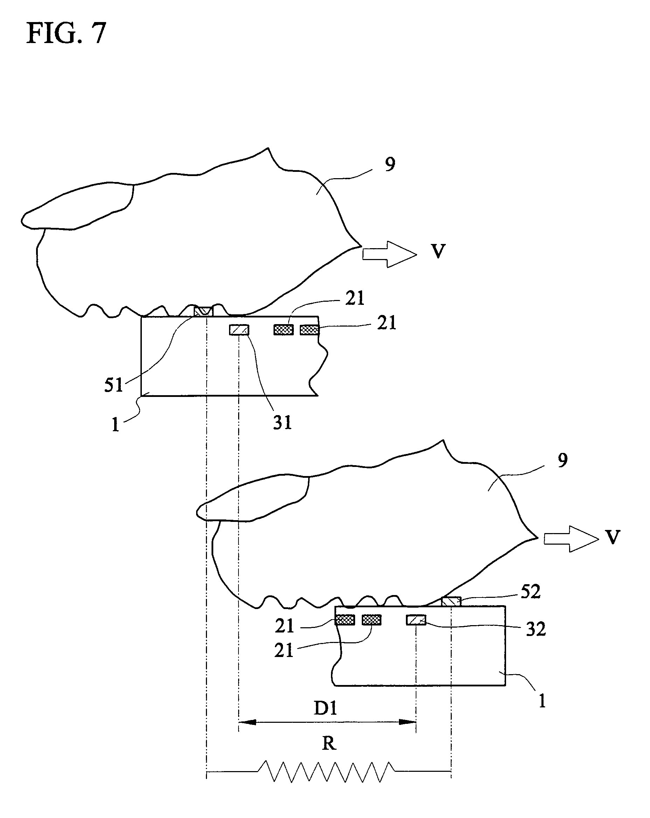

FIG. 5 is a top view showing a sweep-type fingerprint sensor module according to a first embodiment of the invention, FIG. 6 is a cross-sectional view taken along a line L6-L6 of FIG. 5, and FIG. 7 is a side view showing the sweep-type fingerprint sensor in operation according to the first embodiment of the invention. It is to be noted that the dimensions of the finger and sensor are not depicted in the real scale. Referring to FIGS. 5 to 7, the sweep-type fingerprint sensor module of the invention includes a microprocessor 11 and a sweep-type fingerprint sensor 10 electrically connected to the microprocessor 11. As well known skills, the sweep sensor 10 and the microprocessor 11 could be integrated monolithicly in a single LSI chip and the microprocessor 11 could further contain RAM and ROM for data processing and storage use. The sweep-type fingerprint sensor 10 includes a substrate 1, a sensing members array 2, a speed-detecting unit 3, a processing circuit 4, an impedance sensor 5, and a plurality of bonding pads 6. The bonding pads 6 are electrically connected to the microprocessor 11. The sensing members array 2 is formed on the substrate 1 and is composed of a plurality of fingerprint sensing members 21 arranged in a two-dimensional array. It is to be noted that only one sensing member is depicted in the drawing for the sake of simplicity. Each of the fingerprint sensing members 21 may be a capacitive sensing member, a capacitive pressure sensing member, or a thermoelectric sensing member, as described in the commonly-owned, co-pending patent applications:
1. Taiwan Patent Application Serial No. 91106806, filed on April 3, 2002 and entitled "CAPACITIVE FINGERPRINT SENSOR," which is now allowed;
2. Taiwan Patent Application Serial No. 91110443, filed on May 17, 2002 and entitled "CAPACITIVE PRESSURE FINGERPRINT SENSOR AND A METHOD FOR MANUFACTURING THE SAME," which is now allowed; and
3. Taiwan Patent Application Serial No. 90113755, filed on July 6, 2001 and entitled "THERMOELECTRIC SENSOR FOR FINGERPRINT THERMAL IMAGING," which is now issued as the INVENTION PATENT NO. 189671.

In order to match with the dimension of the finger 9, the lateral (X-axis direction) dimension of the sensing members array 2 is at least greater than 8 mm, and the Y-axis (longitudinal) direction can only leave the dimension of the single sensing member. However, in order to provide a portion for the overlapped area and reduce the number of fragment images, the optimum longitudinal (Y-axis direction) dimension preferably ranges from 2.5 to 3.5 mm, which will be described later. A plurality of sensing signals from the sensing members array 2 is processed by the processing circuit 4 and communicates with the outside via the input/output bonding pads 6. The processing circuit 4 basically includes a logic control circuit, a programmable gain amplifier, and an analog-to-digital converter, the corresponding detailed architectures of which have been described in the patent applications of "CAPACITIVE FINGERPRINT SENSOR" and "CAPACITIVE PRESSURE FINGERPRINT SENSOR AND A METHOD FOR MANUFACTURING THE SAME."

The sensing members array 2 senses a fingerprint when a finger 9 (FIG. 3) sweeps across the sensing members array 2, sequentially acquires a plurality of fingerprint fragment images from the finger with a sampling time interval, and then outputs a plurality of fingerprint fragment signals corresponding to the fingerprint fragment images.

In order to overcome the drawbacks of the prior art, the speed-detecting unit 3 is embedded in the sweep-type fingerprint sensor of the invention. The speed-detecting unit 3 is also formed on the substrate 1 and is composed of a first plate electrode 31 and a second plate electrode 32. The first and second plate electrodes 31 and 32 are substantially parallel to each other and are spaced apart by a predetermined distance D1. The plate electrodes are positioned at two sides (upper and lower sides) of the sensing members array 2, respectively, and each has a length substantially equal to the length of the sensing members array 2 in the X-axis direction. The first plate electrode 31 outputs a first time signal when it contacts the finger 9, and the second plate electrode 32 outputs a second time signal when it contacts the finger 9.

Specifically speaking, when the finger 9 sweeps in the Y-axis direction, the finger 9 passes over the first plate electrode 31 to form a trigger capacitance together with the first plate electrode 31 (the corresponding detailed circuit and principle have been described in the patent application of "CAPACITIVE FINGERPRINT SENSOR"), and then a trigger pulse is generated. The trigger pulse may turn on the power of the fingerprint sensor so as to reduce unnecessary power consumption when the sensor is not used. Next, the finger 9 sweeps across the surface the sensing members array 2 and passes over the second plate electrode 32, and another trigger pulse is also generated. Since the distance D1 between the first and second plate electrodes 31 and 32 is known, the sweeping speed V of the finger 9 may be derived after the time difference between the two trigger pulses is calculated. In this embodiment, the sweeping speed V is calculated by the microprocessor 11.

After the microprocessor 11 derives the sweeping speed of the finger 9, the sampling time interval used to acquire the fingerprint fragment images may be calculated. Then, the fingerprint fragment images may be received and processed. Consequently, it is unnecessary to store too many fingerprint fragment images, the microprocessor needs not to have powerful processing speed, and the cost of the module may be advantageously reduced.

Thus, the invention considers both the property and cost of the fingerprint sensor and optimizes the dimension of the sensing members array 2 in the Y-axis direction as ranging from 2.5 to 3.5 mm. In this embodiment, the dimension W in the X-axis direction is 10 mm, and the dimension L in the Y-axis direction is 3.2 mm. In this case, there are 200*64 pixels in the sensing members array 2 with a resolution of 500 DPI. This is because an overlapped length ranging from about 200 to 800 microns in the Y-axis direction has to be provided as a judgement basis for reconstructing two fingerprint fragment images. The overlapped regions are illustrated as A(1) to A(N-1), as shown in FIG. 4. In the case of the conventional sensing members array having the length ranging from 0.8 to 1.6 mm in the Y-axis direction, most of the area is wasted in the overlapped region. Thus, a lot of fragment images are needed to get a complete image. The invention may optimize the Y-axis dimension of the sensing members array 2 as ranging from 2.5 to 3.5 mm by way of sweeping speed detection of the finger, and the reconstructed image is shown in FIG. 4. In addition to the overlapped region, the unoverlapped region of the image has a length ranging from 1.5 to 2.5 mm in the Y-axis direction. Thus, a complete image may be obtained by reconstructing 3 to 5 or 7 to 9 fragment images. Consequently, the required number of fingerprint fragment images may be greatly reduced, and the fragment images may be reorganized together according to the stable and commonly used method of minutia extraction and matching.

The processing circuit 4 is electrically connected to the sensing members array 2 and the speed-detecting unit 3 to receive and process the plurality of fingerprint fragment signals, the first time signal, and the second time signal. Then, the processed signals are output to the microprocessor 11 via the bonding pads 6. The microprocessor 11 derives a sweeping speed V of the finger 9 according to the first time signal, the second time signal, and the predetermined distance D1, determines the sampling time interval according to the sweeping speed V, and further processes and reconstructs the plurality of fingerprint fragments into a complete fingerprint image.

Meanwhile, the embodiment of the invention also provides the live finger detection technology, wherein the impedance sensor 5 is formed on the substrate 1 to sense the impedance of the finger 9 skin to discriminate if the finger 9 is live or not. The impedance sensor 5 includes a pair of exposed metallic, long electrodes 51 and 52. When the finger 9 is placed on the two electrodes 51 and 52, the impedance R of the finger 9 skin may be detected and recorded in the microprocessor. Since the impedance of a fake finger or a dead finger is different from a true and live finger, the true/false condition of the finger may be recognized by the processing of the microprocessor 11. In addition to the impedance sensor, another embodiment of the live finger detection technology may utilize the thermal conductivity property of the finger's skin to determine whether or not the finger is alive. The main discrimination principle is based on that the live finger's skin contains sufficient water and has good thermal conductivity while the fake finger is usually made of silicone or other soft polymeric material with relatively poor thermal conductivity. Alternatively, a cut finger has a lower thermal conductance owing to the loss of blood. The method is implemented by disposing a thermoelectric sensor and a heating resistor on a predetermined area of the chip for sensing the temperature variation signal by the thermoelectric sensor when the finger's skin touches the sensor surface or not. The detection flow is: after the finger contacts the sensor surface and enables the power trigger switch, a pulse current or voltage is supplied to the heating resistor to raise the temperature of the predetermined area to, for example, 50 to 60 °C, which is higher than the finger's temperature. Then, the finger's skin contacts the predetermined area and takes some heat therefrom thus lower down the temperature. Counting the time interval from the raising of temperature to the peak temperature happening by the thermoelectric sensor can estimate the thermal conductivity characteristics of a live finger skin, wherein the skin's thermal conductance property cannot be easily changed even the ambient temperature variation and is a stable physical quantity. So, unlike the human body temperature detection, which tends to be interfered by the external environment and lose the judgement standard, this method is very suitable for the live finger detection. A more precise live finger detection method may further be constructed by combining the thermal conductivity and the temperature detection methods for composite judgement. Besides the thermoelectric sensor, any type of thermal sensor or temperature sensor also could be used to detect the temperature variation.

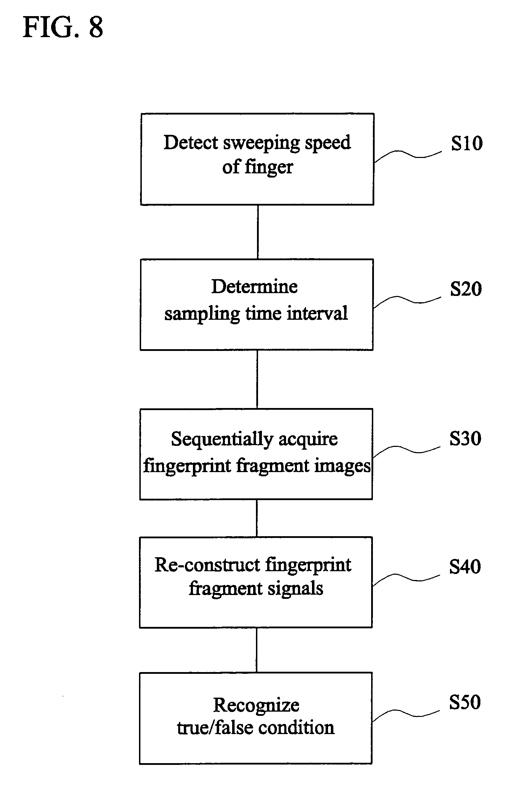

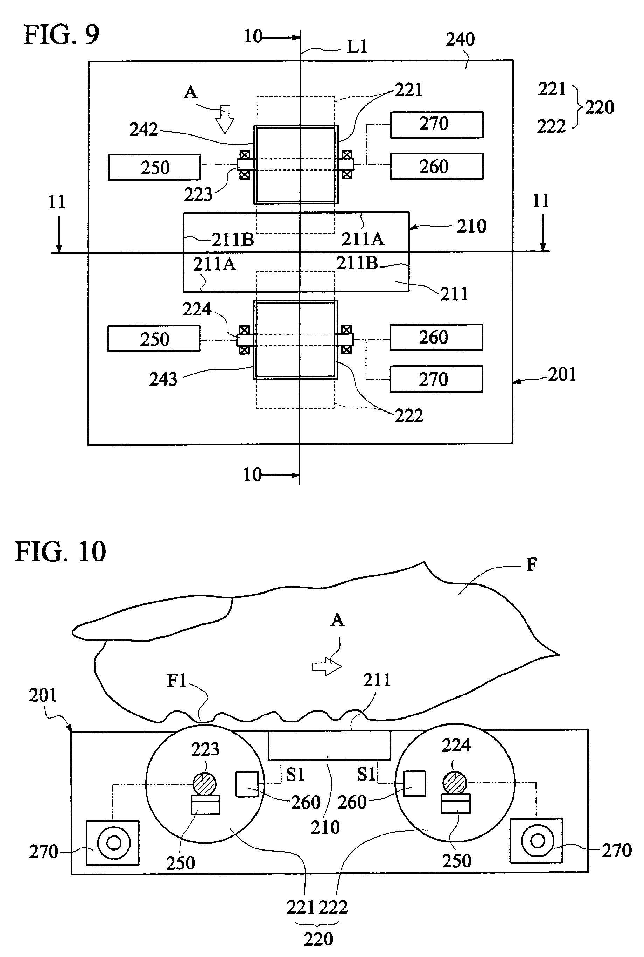

FIG. 8 is a flow chart showing a sensing method for the sweep-type fingerprint sensor of the invention. Referring to FIG. 10, the sensing method for the sweep-type fingerprint sensor of the invention includes the following steps.

In step S 10, a sweeping speed V of the finger 9 is detected. First, when the finger 9 contacts the first plate electrode 31, a first time signal is output. Next, when the finger 9 contacts the second plate electrode 32, which is spaced from the first plate electrode 31 by the predetermined distance D1, a second time signal is output. Then, the sweeping speed V may be obtained by dividing the predetermined distance D1 by the time difference between the first and second time signals.

In step S20, a sampling time interval is determined according to the sweeping speed V. First, an effective length is obtained by subtracting an overlapped length (determined by the fingerprint image processing software) between two adjacent fingerprint fragment images from an image length (Y-axis length of the sensing members array) of each fingerprint fragment image in a sweeping direction of the finger. Then, the sampling time interval is obtained by dividing the effective length by the sweeping speed.

In step S30, a plurality of fingerprint fragment images of the finger 9 is sequentially acquired with the sampling time interval. Then, a plurality of fingerprint fragment signals corresponding to the fingerprint fragment images is output accordingly.

In step S40, the plurality of fingerprint fragment signals is reconstructed into a complete fingerprint image.

In step S50, whether the finger is live or not is determined by the impedance detection or the thermal conductivity estimation method.

Consequently, the invention detects the sweeping speed of the finger to determine the sampling time interval for the fingerprint fragment images so as to effectively reduce the number of fingerprint fragment images, simplify the image processing, and reduce the sensor cost.

FIG. 9 is a schematic top view showing a sweep-type fingerprint sensor module according to a second embodiment of the invention. FIG. 10 is a schematically cross-sectional view taken along a line 10-10 of FIG. 9. Referring to FIGS. 9 and 10, the sweep-type fingerprint sensor module 201 of this embodiment includes a sweep-type fingerprint sensor 210, a T/G (transmission and guiding) mechanism 220, a panel 240, two micro switches 250, two speed/displacement sensors 260, and two drive mechanisms 270. The sweep-type fingerprint sensor 210 has a rectangular sensing surface 211 for sensing a plurality of fingerprint fragment images of a finger F sweeping in a direction A. The fingerprint fragment images are transferred to a microprocessor (not shown) for image reconstruction. The T/G mechanism 220 for guiding the finger F in a stably sweeping direction across the sensing surface 211 is disposed beside the sweep-type fingerprint sensor 210 and is driven along a guiding direction corresponding to the sweeping direction A.

In this embodiment, the T/G mechanism 220 includes two rollers 221 and 222, and the sweep-type fingerprint sensor 210 is positioned between the two rollers 221 and 222. The sweep-type fingerprint sensor 210 and the T/G mechanism 220 composed of the rollers 221 and 222 are arranged in one straight line L1 along the sweep direction A. That is, the guiding direction of the T/G mechanism 220 is perpendicular to a long edge 211A of the rectangular sensing surface 211 of the sweep-type fingerprint sensor 210. The roller 221 is located in front of the sweep-type fingerprint sensor 210 or at a side of the long edge 211A of the rectangular sensing surface 211 such that a specific portion F1 of the finger F may firstly move across the roller 221 and then the sensing surface 211. The roller 222 is located in back of the sweep-type fingerprint sensor 210 or at the other side of the long edge 211A of the rectangular sensing surface 211 such that the specific portion F1 of the finger F may firstly move across the sensing surface 211 and then the roller 222. In fact, only one of the rollers 221 and 222 may achieve the effect of the invention. The finger F will follow the rolling inertia of the roller when sweeping across the sensor surface and ensure the sweeping behavior in an almost straight direction to avoid unclear image reconstruction due to finger shaking and so on. So, the jitters in the left and right directions perpendicular to the sweep direction A when the finger F sweeps across may be effectively eliminated.

In other embodiments, the T/G mechanism may be a caterpillar T/G mechanism that is similar to the sheet-feeding mechanism of a copier, wherein the caterpillar cooperates with the finger to achieve the effect of the invention.

The micro switch 250 is an optional member to be in contact with the rollers 221 and 222 of the T/G mechanism 220. When the finger F contacts the rollers 221 and 222 of the T/G mechanism 220, the micro switch 250 may be triggered and thus turn on the power of the sweep-type fingerprint sensor 210. In this condition, the main power of the fingerprint sensor 210 need not to be always turned on. Instead, the main power may be turned on by the pressing of the finger F on the rollers 221 and 222 of the T/G mechanism 220 to trigger the micro switch 250 when needed.

The speed/displacement sensor 260 is also an optional member for sensing a rotating speed or a displacement of the T/G mechanism 220, and then outputting a rotating speed signal or a displacement signal S1 to the microprocessor (not shown), such that the microprocessor determines the minimum number of the to-be-acquired fingerprint fragment images and thus a plurality of fingerprint fragment images is acquired according to the rotating speed signal or the displacement signal S1. For example, the direction of the speed/displacement may be determined in the opto-electronic manner, the electric manner, the magnetic force manner, and the like, which are to be described later. Because the sweeping speed of the finger during the sensing process of the fingerprint may be regarded as constant, the sensing time interval between two adjacent fingerprint fragment images may be optimized when the rotating speed of the T/G mechanism 220 is already known, and the subsequent image reconstruction procedure may be facilitated.

The drive mechanism 270 such as a motor is also an optional member for driving the T/G mechanism 220 to rotate so as to drive the finger F to sweep across the sensing surface 211. As a result, the driving speed of the drive mechanism 270 is known, and the sensing time interval between two adjacent fingerprint fragment images also may be optimized without worrying about the slight fluctuations of the sweeping speed of the user's finger during this period of time. In addition, the finger's sweep direction may also be fixed.

In this embodiment, the panel 240 is a flat panel, and the sweep-type fingerprint sensor 210 and the T/G mechanism 220 are disposed on the panel 240. The width of the T/G mechanism 220 may be greater than, smaller than or equal to that of the fingerprint sensor 210. Each of the rollers 221 and 222 has an exposed portion exposed from each of the openings 242 and 243 (as indicated by the rectangles defined by the solid lines) of the panel 240 so as to contact the finger while rotating about the shafts 223 and 224.

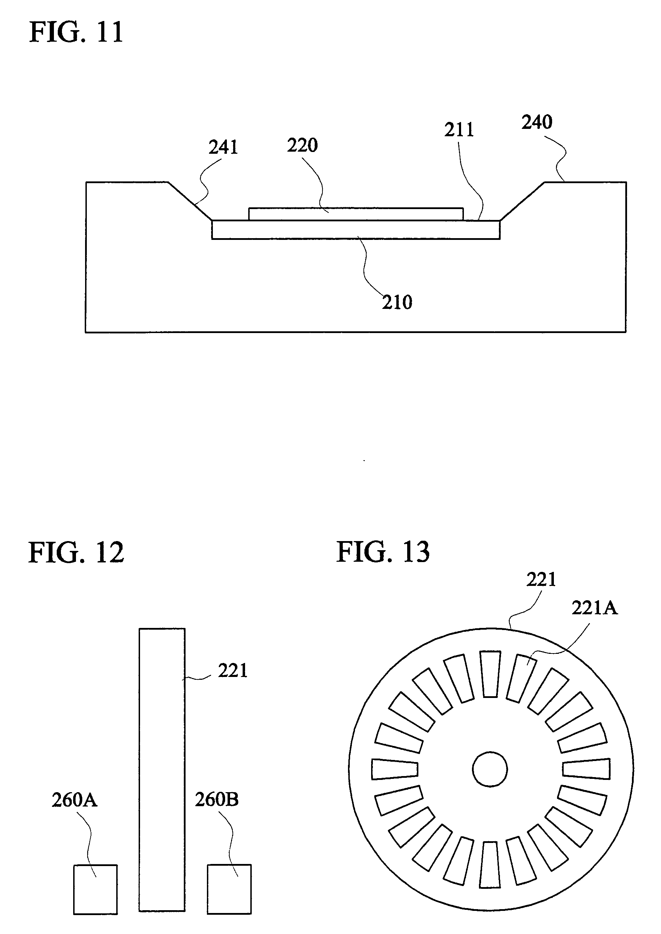

FIG. 11 is a schematically cross-sectional view showing a modified embodiment taken along a line 11-11 of FIG. 9. In this modified embodiment, the panel 240 has a U-shaped groove 241, in which the sweep-type fingerprint sensor 210 and the T/G mechanism 220 are disposed. The T/G mechanism 220 may be flush with or higher than the sweep-type fingerprint sensor 210.

The speed/displacement detection may be achieved in the opto-electronic manner to be described in the following. FIG. 12 is a side view showing the roller and speed/position detector of FIG. 10. FIG. 13 is front view showing the roller of FIG. 10. It is to be noted that the difference between the speed and displacement detections is only in that the speed detection takes the time into account, while the displacement detection does not. The emitter 260A of the speed/position detector 260 continuously emits a signal (such as an infrared signal). Because the signal can only pass through the opening 221A of the roller 221, the receiver 260B discontinuously receives this emitted signal, which discontinuously penetrates through the openings 221A of the roller 221, so as to generate several pulses as the displacement signal. By calculating the pulse number per unit time, the roller's rotation speed, which may correspond to the finger's sweeping speed, may be obtained.

On the other hand, if the time is not taken into account, the sweep-type fingerprint sensor module may be configured such that the fingerprint sensor starts to acquires one fingerprint fragment image each time when the receiver 260B receives one pulse. Such a design may be easily accomplished according to the rotating angle of the roller 221 and the finger's sweeping displacement corresponding to the arc length between two adjacent openings 221A of the roller 221. In this condition, even if the finger's sweeping speed fluctuation is larger, the acquiring of the fingerprint fragment images also cannot be influenced. In brief, if the width (the length in the direction A) of the fingerprint sensor is known, the displacement corresponding to the rotating roller's opening 221A may be configured such that the sensor acquires one fragment fingerprint image each time when the pulse signal appears. In this way, the sweeping speed need not to be detected.

The transmittive speed/position detector 260 mentioned in the example also may be replaced by a reflective speed/position detector. In this case, the emitter 260A and receiver 260B are located at the same side of the roller 221. Forming patterns, which correspond to the openings 221A, on the surface of the roller 221 may enable the receiver 260B to receive the emitted signal reflected by the roller 221 so as to generate several pulses as the displacement signal.

According to the structure of the invention, the jitters generated when the finger sweeps across the sensor may be effectively avoided, the fingerprint sensor also may be powered according to the provided switch function, and the finger's sweeping speed or sweeping distance also may be detected to serve as the basis for sensing the finger's fingerprint fragment images.

While the invention has been described by way of examples and in terms of preferred embodiments, it is to be understood that the invention is not limited to the disclosed embodiments. To the contrary, it is intended to cover various modifications. Therefore, the scope of the appended claims should be accorded the broadest interpretation so as to encompass all such modifications.

## Claims

1. A sweep-type fingerprint sensor module, comprising:
a microprocessor; and
a sweep-type fingerprint sensor, which is electrically connected to the microprocessor and comprises:
a substrate;
a sensing members array formed on the substrate and composed of a plurality of fingerprint sensing members arranged in a two-dimensional array, the sensing members array sensing a fingerprint when a finger sweeps across the sensing members array, sequentially acquiring a plurality of fingerprint fragment images of the finger with a sampling time interval, and outputting a plurality of fingerprint fragment signals corresponding to the fingerprint fragment images accordingly;
a speed-detecting unit formed on the substrate and composed of a first plate electrode and a second plate electrode, the first and second plate electrodes being substantially parallel to each other and spaced apart by a predetermined distance, the first plate electrode outputting a first time signal when it contacts the finger, and the second plate electrode outputting a second time signal when it contacts the finger; and
a processing circuit electrically connected to the sensing members array and the speed-detecting unit to receive, process and then output the plurality of fingerprint fragment signals, the first time signal, and the second time signal, wherein the microprocessor derives a sweeping speed of the finger according to the first time signal, the second time signal, and the predetermined distance, determines the sampling time interval according to the sweeping speed, and reconstructs the plurality of fingerprint fragment signals into a complete fingerprint image.

2. The module according to claim 1, wherein the sensing members array has a dimension ranging substantially from 2.5 to 3.5 mm in a sweeping direction of the finger.

3. The module according to claim 1, wherein the sweep-type fingerprint sensor further comprises an impedance sensor formed on the substrate to sense an impedance of the finger to discriminate if the finger is live or not.

4. The module according to claim 3, wherein the impedance sensor includes two long electrodes.

5. The module according to claim 1, wherein the sweep-type fingerprint sensor further comprises:
a heating resistor; and
a thermoelectric sensor for sensing a temperature variation of skin of the finger, wherein the heating resistor is supplied with a pulse current or voltage to raise its temperature above that of the finger so that the skin of the finger in contact with the heating resistor and the thermoelectric sensor takes some heat therefrom, and a thermal conductance property of the skin is derived as a basis for live finger detection by calculating an occurring time interval of a peak value temperature of the thermoelectric sensor.

6. The module according to claim 1, wherein the sensing members array is composed of a plurality of capacitive sensing members, a plurality of thermoelectric sensing members, or a plurality of capacitive pressure sensing members arranged in a two-dimensional array.

7. A sensing method for a sweep-type fingerprint sensor module, comprising the steps of:
detecting a sweeping speed of a finger;
determining a sampling time interval according to the sweeping speed;
sequentially acquiring a plurality of fingerprint fragment images from the finger with the sampling time interval, and outputting a plurality of fingerprint fragment signals corresponding to the fingerprint fragment images; and
reconstructing the plurality of fingerprint fragment signals into a complete fingerprint image.

8. The method according to claim 7, wherein the step of detecting the sweeping speed of the finger comprises the steps of:
outputting a first time signal when the finger contacts a first plate electrode;
outputting a second time signal when the finger contacts a second plate electrode that is spaced from the first plate electrode by a predetermined distance; and
dividing the predetermined distance by a time difference between the first and second time signals so as to obtain the sweeping speed.

9. The sensing method according to claim 7, wherein the step of determining the sampling time interval according to the sweeping speed comprises the steps of:
subtracting an overlapped length between two adjacent fingerprint fragment images from an image length of each of the fingerprint fragment images in a sweeping direction of the finger to obtain an effective length; and
dividing the effective length by the sweeping speed to obtain the sampling time interval.

10. The sensing method according to claim 7, further comprising the step of:
detecting an impedance of the finger to discriminate if the finger is live or not.

11. The method according to claim 7, further comprising the steps of:
supplying a pulse current or voltage to a heating resistor to raise its temperature above that of the finger;
utilizing a thermoelectric sensor to sense a temperature variation of skin of the finger, wherein the skin of the finger in contact with the heating resistor and the thermoelectric sensor takes some heat therefrom; and
counting a time interval from the raising of temperature to the peak temperature happening by the thermoelectric sensor to estimate a thermal conductivity of the skin as a basis for live finger detection.

12. A sweep-type fingerprint sensor module, comprising:
a sweep-type fingerprint sensor for sensing a plurality of fingerprint fragment images of a finger sweeping across a sensing surface of the sweep-type fingerprint sensor along a sweep direction; an
a T/G (transmission and guiding) mechanism, which is disposed beside the sweep-type fingerprint sensor and is driven along a guiding direction corresponding to the sweep direction, for guiding the finger in a stably sweeping direction across the sensing surface.

13. The module according to claim 12, wherein the sensing surface is rectangular, and the guiding direction of the T/G mechanism is perpendicular to a long edge of the rectangular sensing surface of the sweep-type fingerprint sensor.

14. The module according to claim 13, wherein the T/G mechanism comprises at least one roller, which is located at one side of the long edge of the rectangular sensing surface of the sweep-type fingerprint sensor such that a specific portion of the finger moves across the at least one roller and then the sensing surface, or moves across the sensing surface and then the at least one roller.

15. The module according to claim 12, further comprising:
a panel formed with a U-shaped groove, in which the sweep-type fingerprint sensor and the T/G mechanism are disposed.

16. The module according to claim 12, further comprising:
a micro switch, which is in contact with the T/G mechanism, for turning on power of the sweep-type fingerprint sensor when the finger contacts the T/G mechanism.

17. The module according to claim 12, further comprising:
a speed or displacement sensor for sensing a rotating speed or displacement of the T/G mechanism and outputting a rotating speed or displacement signal to a microprocessor, which determines a minimum number of the fingerprint fragment images to be acquired according to the rotating speed or displacement signal.

18. The module according to claim 17, wherein the T/G mechanism includes a roller, and the speed or displacement sensor comprises:
an emitter for outputting an emitted signal; and
a receiver for receiving the emitted signal that discontinuously penetrates through a plurality of openings of the roller or for receiving the emitted signal reflected from the roller so as to generate several pulses as the rotating speed or displacement signal.
